Europäisches Patentamt

European Patent Office

Office européen des brevets

(11) Publication number: **0 357 329**
**A2**

# (12) EUROPEAN PATENT APPLICATION

(21) Application number: **89308546.4**

(22) Date of filing: **23.08.89**

(51) Int. Cl.⁵: **C 08 F 259/06**
**C 08 F 2/46**
**//(C08F259/06,220:20)**

(30) Priority: **29.08.88 US 237545**

(43) Date of publication of application:
**07.03.90 Bulletin 90/10**

(84) Designated Contracting States:
**BE DE FR GB IT NL SE**

(71) Applicant: **MINNESOTA MINING AND MANUFACTURING COMPANY**
**3M Center, P.O. Box 33427**
**Saint Paul, MN 55133- 3427 (US)**

(72) Inventor: **Sidney, Lu Ann N. c/o Minnesota Mining and Manufacturing Comp. 2501 Hudson Road P.O.Box 33427 St. Paul Minnesota 55133-3427 (US)**

**Stivers, David A. c/o Minnesota Mining and Manufacturing Comp. 2501 Hudson Road P.O.Box 33427 St. Paul Minnesota 55133-3427 (US)**

(74) Representative: **Baillie, Iain Cameron et al c/o Ladas & Parry Isartorplatz 5 D-8000 München 2 (DE)**

(54) Fluorocarbon elastomers crosslinked by ionizing radiation.

㋝ A fluorocarbon elastomer having remarkably high tensile strength, high modulus in tension, and excellent retention of tensile strength at elevated temperatures, made from a copolymer of vinylidene fluoride and at least one copolymerizable fluorine-containing monomer blended with a polyfunctional acrylate and exposed to high-energy ionizing radiation to crosslink the copolymer. No thermal curing agent needs to be used unless the elastomer is being molded to form a shaped body such as an O-ring or a gasket. Even then, the preferred amount of thermal curing agent is only about one-fourth the amount used in the prior art for crosslinking such fluorocarbon elastomer copolymers. The fluorocarbon elastomer is especially useful as fuel line tubing and can be so used without a jacket.

EP 0 357 329 A2

**Description**

## FLUOROCARBON ELASTOMERS CROSSLINKED BY IONIZING RADIATION

Background of the Invention

### Field of the Invention

The invention concerns elastomers made by crosslinking copolymers of vinylidene fluoride and copolymerizable fluorine-containing monomers such as hexafluoropropylene. The invention also concerns methods of crosslinking those copolymers by ionizing radiation, e.g., x-radiation, gamma-radiation, electrons, protons, deuterons, alpha-particles, and neutrons.

### Description of the Related Art

Copolymers of vinylidene fluoride and hexafluoropropylene (which is also called "hexafluoropropene" or "perfluoropropene") have been available for more than thirty years and are currently marketed as "Viton" by E.I. duPont de Nemours and "Fluorel" by 3M. Recently, Asahi Glass Co. has introduced as "Aflas" 200 (available from 3M in U.S.A.), a copolymer of vinylidene fluoride, propylene, and tetrafluroethylene. All of these copolymers are here called "fluorocarbon elastomers". A fluorocarbon elastomer typically is an amorphous gum that is compounded with a curing (crosslinking) agent, e.g., a blend of a polyphenol such as bisphenol AF, an onium compound such as triphenylbenzylphosphonium chloride, and an acid acceptor such as magnesium oxide or calcium hydroxide. The resulting composition can be formed by molding or extrusion into such shapes as rods, tubing, O-rings, shaft seals, gaskets, and sheets that are then heated to become crosslinked to an elastomeric state.

A fluorocarbon elastomer gum is considered to be amorphous when it is substantially free from regions of ordered crystallinity. Crystallinity in polymers can be shown by sharp features in X-ray and electron diffraction patterns, birefringence measurements, and light scattering measurements. Those polymers which exhibit substantially no such order indicative of crystallinity are termed amorphous. (See G. Odian, "Principles of Polymerization," 2nd. ed., chap. 1, pp 25-29, John Wiley & Sons, New York, 981).

It is believed that of known fluorocarbon elastomers, those that have the highest tensile strength and 100% modulus combined with good elongation are disclosed in U.S. Pat. No. 4,446,270 (Guenthner et al.). They are obtained by copolymerizing a fluorine-containing monomer such as vinylidene fluoride and a copolymerizable fluorine-containing monomer such as hexafluoropropene to obtain an amorphous gum which is thermally cured with a selected vulcanizing agent. The vulcanizable compositions of the Guenthner patent generally include fillers such as carbon black.

U.K. Pat. Spec. No. 1,120,131 (Clabburn) which was published July 17, 1968, says that fluorocarbon elastomer copolymers of vinylidene fluoride and hexafluoropropylene can be crosslinked "by chemical means, for example, by peroxides or amines, or by high energy radiation, such, for example, as gamma rays or accelerated electrons. Generally, the cross-linking step is followed by a prolonged post-cure at a temperature in the region of 200° C... The usual dose to produce a satisfactory degree of cross-linking is about 10 megarads (Mrads)" (page 1, lines 36-52). The invention of the Clabburn specification involves adding to the crosslinkable composition a crystalline fluoropolymer such as polyvinylidene fluoride to obtain high shrinkage for such purposes as "harness moulds for electrical wiring near the engines of jet aircraft."

U.S. Pat. No. 2,965,553 (Dixon et al.) specifically concerns the curing of high molecular weight fluorocarbon elastomer polymers by the use of high energy ionizing radiation such as beta or gamma rays. Among a variety of polymers named in the Dixon patent are copolymers of vinylidene fluoride and hexafluoropropylene, there also called "hexafluoropropene." The polymers are compounded with "about 0.5 to about 6% by weight of polymer of a free radical acceptor selected from the group consisting of N-substituted maleimides, N-N'-substituted-bis-maleimides and bis-acrylamides, and cyclic tris-acrylamide followed by subjecting the compounded polymer to ionizing radiation" (col. 1, lines 46-54).

Lipko et al. "Transparent Fluorocarbon-Based Semi-II IPN Elastomers by High-Energy Radiation Methods," Journal of Applied Polymer Science, Vol. 23, pp 2739-2755 (1979), discusses the addition of small amounts of multifunctional monomer to fluorocarbon elastomer copolymers of vinylidene fluoride and hexafluoropropylene, followed by polymerization in situ of the monomer by high-energy radiation to give an interpenetrating network (IPN). "Samples of fluorocarbon elastomers containing between 0% and 7% TMPTM (trimethylolpropane trimethacylate) were prepared for one series, and samples containing 1% TMPTM and 15%-30% n-butyl acrylate were prepared for a second series" (page 2741). The radiation was from a Co-60 gamma source, a beta source, or ultraviolet lights. The beta- and gamma-irradiation levels were between 0 and 10 Mrad.

The Lipko publication concludes: "The major properties sought in this research program were a fluorocarbon-based elastomer with reduced creep and great toughness combined with optical clarity. On the basis of mechanical and physical studies, the 3% level of TMPTM appears to be best. Although creep and % extractable materials are lower at higher TMPTM levels (5%), optical considerations make 3% the necessary upper concentration limit" (page 2754).

U.S. Pat. No. 4,652,592 (Kawashima et al.) concerns fluorocarbon elastomers that are chemically modified in such a way that they become crystalline Among materials used for making those fluorocarbon elastomers are vinylidene fluoride and hexafluoropropylene which have been polymerized with an unsaturated peroxide. Then onto each of those fluorocarbon elastomers is grafted a fluorine-containing crystalline polymer at a temperature high enough to decompose the peroxy bond in the basic composition. The resulting graft copolymer containing an appropriate amount of triallylcyanurate is formed into a shaped body which is subjected to ionizing radiation such as gamma-rays from sources such as cobalt-60 or beta-rays from electron beam sources to cause crosslinking of the copolymer. Exposures are from 0.1 to 20 Mrad, above which deterioration of the irradiated copolymer begins. The Kawashima patent says that by adding the triallylcyanurate, the mechanical properties and heat resistance of the shaped body are improved so that "the shaped material after radiation-induced cross-linking does not melt and does not lose shape until the temperature far exceeds 200°C."

U.S. pat. No.4,417,174 (Kamijo et al.) concerns an electroluminescent cell or panel in which a phosphorescent powder such as zinc sulfide is mixed with a fluorocarbon elastomer copolymer of vinylidene fluoride and hexafluoropropylene and a vulcanizing agent. This is then vulcanized at 150°C to form a luminescent layer. Example 2 uses "a vulcanizing agent such as an amine, polyol or peroxide. "By employing such a luminescent layer instead of using a nonfluorinated material, it is said to provide better moisture resistance and better resistance to heat, the latter property permitting a higher voltage to be applied. This provides a luminescent cell "whose luminous intensity is high and which is highly reliable."

Japanese Patent Application No. JP61-21114 (Yasuda), which was laid open Jan. 29, 1986, concerns fluorocarbon elastomers which are block copolymers containing crystalline segments, among which are copolymers of vinylidene fluoride and hexafluoropropylene. It says that the flame resistance and the heat-aging resistance of these elastomers are enhanced by incorporating a zinc or lead compound and curing by applying an electron beam. Used in the starting compositions are either 3 or 5 parts of a crosslinking agent per 100 parts by weight of the fluorinated copolymer. The crosslinking agent in most of the examples is said to be "TMPT" which apparently refers either to tri-methylol-propane-tri-acrylate or tri-methylol-propane-tri-methacrylate. The Yasuda application says that when tubing is cured by heat, there is a problem of heat-deformation so that radiation curing such as electron beam curing is preferable.

European Pat. Appl. No. 203, 457 (Ueno) says that blends of tetrafluoroethylene-propylene copolymer and a crystalline vinylidene fluoride-fluoroolefin copolymer with a crosslinking (curing) agent can be molded and then irradiated wth electron beam to produce heat shrinkable articles. "The fluoroolefin content of the vinylidene fluoride-fluoroolefin copolymer is fixed to 1 to 20 mol % so as to endow the copolymer with property of crystalline polymer in order to obtain a mechanical strength of a predetermined desired level" (page 5). "Examples of the cross-linking agent which can be used in the present invention include triallyl cyanurate, diacrylates ..., dimethacrylates ..., trimethacrylates ..., diallyl maleate, diallyl fumarate, and the like" (page 6). The radiation crosslinked fluoroelastomer composition is said to exhibit improved mechanical strength and improved low temperature characteristics.

Because fluorocarbon elastomers are highly resistant to gasoline and other fuels and have better resistance to heat than do hydrocarbon elastomers, they are 35 used for such purposes as fuel lines for aircraft and automotive vehicles, O-rings, shaft seals, and gaskets. For use as a fuel line, the fluorinated copolymer has been extruded as tubing onto a mandrel to keep the tubing from collapsing and then wrapped in a jacket prior to being heated to crosslink the amorphous gum. The extruded tube is shaped and cured in this manner to maintain sufficient structural stability.

Nylon has good resistance to fuels and sufficient structural stability that nylon tubing can be used as a fuel line without any jacket. For these reasons and because nylon is far less expensive than fluorocarbon elastomers, nylon is often used as fuel line tubing in spite of the fact that it is far less resistant to heat than are fluorocarbon elastomers. In such use, nylon tubing can melt or become brittle when exposed to heat from the engine and has been cited as the cause of serious fires. For this reason, it can be necessary to use a heat shield for nylon fuel lines in certain areas or to replace the nylon with jacketed fluorocarbon elastomer tubing in those areas.

Because some fluorocarbon elastomers have a high dielectric constant and are resistant to moisture, they are useful in electroluminescent display panels.

## Summary of the Invention

The invention provides what is believed to be the first fuel line tubing that has good fire resistance, can be produced without using a mandrel, does not require either a jacket or a heat shield to prevent fires, and can be made at a cost not appreciably exceeding that of nylon fuel line tubing. More broadly, the invention provides a fluorocarbon elastomer having extraordinarily high tensile strength and elongation without sacrificing other properties such as fuel resistance and low-temperature performance. These capabilities are accomplished by crosslinking a substantially amorphous copolymer of vinylidene fluoride and at least one copolymerizable fluorine-containing monomer such as hexafluoropropylene by the following steps:

1) blending per 100 parts of the copolymer at least 2 parts by weight of a polyfunctional acrylate plus, when the amount of acrylate is less than 8 parts, sufficient thermal curing agent to permit the blend to be molded to form a shaped body, and when the acrylate is difunctional, including a base;

    2) forming the blend into a shaped body, and

    3) exposing the body to from 0.1 to 20 Mrads of ionizing radiation.

Preferably step 3) is followed by step 4), post-curing the body for about 24 hours at a temperature of from 175° to 260°C, because this results in reduced percent set at break and greater hardness. Post-curing also may enhance tensile strength and reduce compression set, the latter being especially important for O-rings, gaskets, and shaft seals. Post-curing at temperatures substantially above 260°C may degrade elastomeric properties.

The blending step 1) can be carried out in solution when the shaped body to be formed in step 2) is a sheet. When doing so, thermal curing agent preferably is not used because the heat necessary to utilize a thermal curing agent would tend to distort the sheet. Furthermore, uses for such sheets tend to require transparency which would be reduced by a thermal curing agent. When the blending step 1) is carried out in solution, the forming step 2) can be carried out at room temperature to produce self-supporting films or coatings on metallic or organic substrates.

The blending step 1) can be carried out solvent-free when the shaped body is to be formed by extrusion, e.g., to form fuel line tubing. When doing so, thermal curing agent preferably is not used because the heat of curing would tend to distort the extruded product, e.g., tend to collapse an unsupported tubing.

When no thermal curing agent is used, the blend formed in step 1) should contain at least 8 parts by weight of the polyfunctional acrylate in order to achieve the properties outlined above. To attain truly high tensile strength and elongation without sacrificing other properties, the blend should contain at least 10 parts of the polyfunctional acrylate.

When the shaped body is to be formed in step 2) by molding, e.g., to produce O-rings, the blend formed in step 1) should include a thermal curing agent to permit the shaped body to be demolded, and the molding should be carried out at a curing temperature (e.g., 150-200°C). After being demolded, the shaped body can be irradiated in step 3) to attain the properties afforded by irradiation.

Products that are formed by molding in the above-outlined method typically do not require extraordinarily high tensile strength, but the properties they do require can usually be achieved when using as little as 2 parts by weight of the polyfunctional acrylate. Furthermore, these properties can be achieved using levels of curing agent that are significantly lower than have been required in the prior art for thermally curing fluorocarbon elastomer copolymers, e.g., about 1/4 as much.

When a thermal curing agent is not employed and the polyfunctional acrylate is difunctional, a base should be milled into the copolymer prior to step 2). Useful bases include magnesium oxide, calcium hydroxide, and barium oxide.

A thermal curing agent should be selected so that it does not react with the polyfunctional acrylate and remains inactive during the irradiation step 3). When a thermal curing agent is used, the polyfunctional acrylate should be selected so that it is substantially inert at the temperature of the forming step 2). A preferred curing agent is a blend of a polyphenol such as bisphenol AF, an onium compound such as triphenylbenzylphosphonium chloride, and an acid acceptor such as magnesium oxide or calcium hydroxide.

By virtue of employing ionizing radiation to crosslink the fluorocarbon elastomer copolymer, it does not need to be exposed to high temperatures (typically 160°C or higher) that have been employed in prior thermal curing processes. In contrast, commercially useful production rates should be achievable in the above-outlined process without heating the copolymer to a temperature above the range of 60° to 100°C. By keeping this temperature low, the novel fluorocarbon elastomers can be produced as tubing which does not need to be jacketed to retain its shape.

The modulus in tension of the fluorocarbon elastomers of the invention can be much higher than that of any known fluorinated elastomer without sacrificing any significant physical property of a good elastomer, and it can so be improved in other respects. For example, the novel fluorocarbon elastomers can have remarkably high tensile strength and elongation in combination with surprisingly wide ranges of moduli in tension and hardness. The desired modulus and hardness can be attained simply by changing the dosage of ionizing radiation, in contrast to the need in the prior art to revise the formulation in order to accomplish such changes in properties. Furthermore, the wide ranges of moduli and hardness can be achieved by fluorocarbon elastomers of the present invention without sacrificing other properties expected of a good elastomer.

Preferred fluorocarbon elastomers of the invention have a tensile strength (ASTM D412) of at least 20 MPa, an elongation of at least 125%, a 100% modulus in tension of at least 16 MPa, and at most 12% set at break. Surprisingly, this combination of properties can be achieved without employing a reinforcing agent. Although fluorocarbon elastomers of the prior art can have a tensile strength of about 20 MPa by being highly loaded with reinforcing agents such as carbon black, their use tends to reduce rubbery properties.

## Detailed Disclosure

Among useful sources of the ionizing radiation are an electron beam, gamma radiation from cobalt 60, x-rays, protons and alpha-particles. An electron beam is a preferred source when its accelerating voltage is sufficient to penetrate through the shaped body. This usually requires more than 150 KeV.

In step 3) of the above-outlined method, the exposure preferably does not exceed that required to crosslink the fluorocarbon elastomer copolymer sufficiently. A preferred exposure is between 0.2 and 10 Mrads. below that range, the shaped body might not develop the desired tensile strength and balance of properties. For example, when the shaped body is tubing, the tubing might not hold its shape at high temperatures potentially encountered in use. Above that range of exposures, there is a risk that the ionizing radiation might degrade the elastomeric properties of the crosslinked copolymer. Preferably the exposure is sufficient to afford to the novel fluorocarbon elastomer a 100% modulus in tension of at least 15 MPa, because such a modulus enables the fluorocarbon elastomer to be used as fuel line tubing without a jacket.

When the shaped product can be opaque, carbon black can be added in step 1) as a processing aid and can also provide a reinforcing effect. As in the prior art, the amount of carbon black can equal the weight of the copolymer, but in the present invention, the crosslinking reinforces the fluorocarbon elastomer to such an extent that carbon black has less of a reinforcing effect. Hence, the amount of carbon black preferably does not exceed 60% by weight of the copolymer. Otherwise, the resulting fluorocarbon elastomer might be too hard and fail to exhibit properties expected of a good elastomer.

When the shaped body is to be extruded as tubing, up to about 5 parts of a wax such as carnauba wax per 100 parts by weight of the fluorocarbon elastomer copolymer can be added as an extrusion aid to afford a desirably smooth surface to the tubing, preferably in the minimum amount (e.g., up to 2% by weight of the copolymer) that accomplishes that purpose, because large amounts might derogate the physical properties of the resulting fluorocarbon elastomer.

The high elongation of the novel fluorocarbon elastomers permits them to be more easily installed where stretching is required, e.g., as O-rings. The novel fluorocarbon elastomers also can have remarkably high tensile strengths at elevated temperatures, thus making them especially useful as shaft seals, packings, and various oil well components. The novel fluorocarbon elastomers can also have low % set at break and low compression set, properties important for gaskets and O-rings.

The novel crosslinked fluorocarbon elastomers can be made using from about 10 to 90 parts of vinylidene fluoride and correspondingly from about 90 to 10 parts by weight of copolymerizable fluorine-containing monomer. Preferably the proportion of vinylidene fluoride does not substantially exceed 80 parts in order to assure that the copolymer is substantially amorphous. On the other hand, the proportion of vinylidene fluoride preferably is at least 25 parts to provide good elastomeric properties. By selecting the proportions of monomer as well as the processing conditions and the materials such as the polyfunctional acrylate added to the amorphous fluorine-containing copolymer, the crosslinked fluorocarbon elastomers of the invention can have significant differences from each other in physical properties.

Useful copolymerizable fluorine-containing monomers include chlorotrifluoroethylene, 2-chloroperfluoropropene, a fluorocarbon methyl vinyl ether, hexafluoropropylene, tetrafluoroethylene, 1-hydroperfluoro-propene (i.e., $CFH=CFCF_3$), dichlorodifluoroethylene, trifluoroethylene, 1,1-chlorofluoroethylene, and vinylidene chloride. Vinylidene fluoride and one or more of these fluorine-containing monomers may also be copolymerized with other olefinic compounds such as ethylene and propylene. The preferred fluorocarbon elastomers of the invention are copolymers of vinylidene fluoride with at least one terminally unsaturated fluoromonoolefin containing at least one fluorine atom substituent on each double bonded carbon atom, each carbon atom of said fluoromonoolefin being substituted only with fluorine, chlorine, hydrogen or a lower fluoroalkyl (e.g., perfluoroalkyl of 1-4 carbon atoms) or fluoroalkoxy radical of 1-4 carbon atoms, particularly hexafluoropropylene, tetrafluoroethylene, chlorotrifluoroethylene, and 1-hydroperfluoropropene. Particularly preferred are the fluorocarbon elastomers produced by copolymerizing hexafluoropropylene and vinylidene fluoride, as described in U.S. Pat. No. 3,051,677, and 3,318,854, and those terpolymers produced by copolymerizing hexafluoropropylene, vinylidene fluoride, and tetrafluoroethylene as described in U.S. Pat. No. 2,968,649.

## The Examples

The examples, wherein all parts are given by weight, employ polyfunctional acrylates which are marketed by Arco Chemical under the designation "Sartomer® SR". Useful polyfunctional acrylates include:

SR-213 1,4-butanediol diacrylate
SR-290 tris(2-hydroxyethyl) isocyanurate trimethacrylate
SR-295 pentaerythritol tetraacrylate
SR-350 trimethylolpropane trimethacrylate
SR-351 trimethylolpropane triacrylate
SR-368 tris(2-hydroxyethyl) isocyanurate triacrylate
SR-399 dipentaerythritol hydroxypentaacrylate
SR-444 pentaerythritol triacrylate

## Examples 1-7

A substantially amorphous copolymer of 78 parts of vinylidene fluoride and 22 parts of hexafluoropropylene was made into crosslinked films by:

1) dissolving the the copolymer in methylisobutyl ketone to provide a 30% solution,

2) dissolving SR-351 into the solution,

3) casting the solution to a wet thickness of 2.5 mm,

4) allowing the solvent to volatilize overnight followed by one hour in a 100°C oven to provide a film having a dried thickness between 0.18 and 0.4 mm, and

5) exposing the film to 225 KeV of high-energy ionizing radiation from an electron beam while maintaining a nitrogen purge of 0.15 m³/min. and moving the film at 7.6 m/min., thus crosslinking the film.

The resulting films were tested for tensile strength by ASTM Test Method D412 and for Shore A hardness. Some of the crosslinked films were also tested at ambient temperatures after heat aging at 200°C for 70 hours. Others were tested as soon as they had been heated to elevated temperatures. Results are reported in Table I.

Comparative Film C-1 of Table I was identical to the films of Examples 1-7 except omitting the polyfunctional acrylate.

Comparative Film C-2 of Table I was made using the same fluorocarbon elastomer copolymer, but omitting the polyfunctional acrylate and instead blending on a rubber mill a solvent-free mixture of 100 parts of the copolymer with a preferred thermal curing agent, namely a mixture of

2.1 parts bisphenol AF,

0.5 part triphenylbenzyl phosphonium chloride,

3.0 parts magnesium oxide, and

6.0 parts calcium hydroxide,

and step 5) of the process was replaced by the step of thermally crosslinking the resulting film in a press (1000 psi; 6.9 MPa) for 10 minutes at 177°C and post-curing for 24 hours at 260°C. The thickness of Comparative Film C-2 was 1.3 mm.

Comparative Films C-3 and C-4 of Table I were made in the same way as C-2 except including 30 and 60 parts of carbon black (N990), respectively.

The heat aging results for the fluoroelastomer compositions of Examples 3, 4 and 5 are excellent and compare favorably to the heat aging of Comparative Film C-3 which provides high-quality jacketed fuel line hose in current commercial use. In contrast, nylon currently being used commercially for fuel line tubing becomes brittle when aged for 70 hours at only 121°C as evidenced by an elongation at break of only 30% (as compared to 200% before heat aging).

TABLE I

| Example No. | 1 | 2 | 3 | 4 | 5 | 6 | 7 | C-1 | Comparative Films C-2 | C-3 | C-4 |
|---|---|---|---|---|---|---|---|---|---|---|---|
| SR-351 (parts) | 2.5 | 5 | 10 | 15 | 20 | 10 | 10 | -- | -- | -- | -- |
| Exposure (Mrads) | 10 | 10 | 10 | 10 | 10 | 1 | 5 | 10 | -- | -- | -- |
| Tensile strength (psi) | 920 | 1475 | 2525 | 3435 | 4035 | 1100 | 2355 | 1090 | 1010 | 2000 | 2000 |
| Tensile strength (MPa) | 6.3 | 10.2 | 17.4 | 23.7 | 27.8 | 7.6 | 16.2 | 7.5 | 7.0 | 13.8 | 13.8 |
| Elong. at break (%) | 500 | 350 | 200 | 200 | 110 | 300 | 360 | >800 | 250 | 200 | 120 |
| Set at break (%) | 18 | 6 | 12 | 6 | 6 | 25 | 12 | 25 | 3 | 3 | 6 |
| 100% Modulus (psi) | 220 | 550 | 1965 | 2945 | 4000 | 915 | 1570 | | 225 | 900 | 1400 |
| 100% Modulus (MPa) | 1.5 | 3.8 | 13.6 | 20.3 | 27.6 | 6.3 | 10.8 | | 1.6 | 6.2 | 9.7 |
| Hardness (Shore A) | 40 | 40 | 87 | 92 | 95 | 62 | 70 | | 55 | 79 | 90 |
| After 70 hr. @ 200°C | | | | | | | | | | | |
| Tensile str. (psi) | | | 1900 | 1990 | 2405 | | | | | 1960 | |
| Tensile str. (MPa) | | | 13.1 | 13.7 | 16.6 | | | | | 13.5 | |
| Elong. at break (%) | | | 250 | 220 | 110 | | | | | 190 | |
| At 149°C | | | | | | | | | | | |
| Tensile str. (psi) | | | 1040 | 2460 | 1970 | | | | | 690 | |
| Tensile str. (MPa) | | | 7.1 | 17.0 | 13.6 | | | | | 4.8 | |
| Elong. at break (%) | | | 150 | 100 | 90 | | | | | 100 | |
| At 177°C | | | | | | | | | | | |
| Tensile str. (psi) | | | 650 | 1230 | 640 | | | | | | |
| Tensile str. (MPa) | | | 4.5 | 8.5 | 4.4 | | | | | | |
| Elong. at break (%) | | | 50 | 80 | 60 | | | | | | |

EP 0 357 329 A2

### Examples 8-13

A series of films was made by blending on a rubber mill a solvent-free mixture of 100 parts of the fluorocarbon elastomer copolymer of Examples 1-7, 10 parts SR-351, and 10 parts of carbon black (N990), and formed in a press (1000 psi; 6.9MPa) for 2 minutes at 100°C. The thickness of each film was between 1.6 and 1.8 mm. Some of the films were then crosslinked by exposure to gamma radiation from Co-60 while the others were subjected to 2.5 MeV electron-beam radiation (EB) in air as indicated in Table II.

TABLE II

| Example No. | 8 | 9 | 10 | 11 | 12 | 13 |
|---|---|---|---|---|---|---|
| Irradiation (type) | EB | gamma | EB | gamma | EB | gamma |
| Exposure (Mrads) | 2 | 2 | 5 | 5 | 10 | 10 |
| Tensile strength (psi) | 1615 | 1810 | 1840 | 2065 | 2145 | 2365 |
| Tensile strength (MPa) | 11.1 | 12.5 | 12.7 | 14.2 | 14.8 | 16.3 |
| Elongation at break (%) | 250 | 250 | 110 | 150 | 80 | 100 |
| Set at break (%) | 12 | 6 | 6 | 6 | 6 | 6 |
| 100% Modulus (psi) | 1465 | | 1750 | 1975 | | 2365 |
| 100% Modulus (MPa) | 10.1 | | 12.1 | 13.6 | | 16.3 |
| Hardness (Shore A) | 87 | 88 | 90 | 89 | 88 | 92 |

### Examples 14-24

A series of crosslinked films was made and tested as in Examples 1-7 except for changes in the polyfunctional acrylate and its amount, as indicated in Table III. Each of the films had a dried thickness between 0.2 and 0.3 mm. The exposure of each was 10 Mrads.

## TABLE III

| EXAMPLE | 1 | 2 | 3 | 14 | 15 | 16 | 17 | 18 | 19 | 20 | 21 | 22 | 23 | 24 |
|---|---|---|---|---|---|---|---|---|---|---|---|---|---|---|
| SR-351 (parts) | 2.5 | 5 | 10 | | | | | | | | | | | |
| SR-368 (parts) | | | | 2.5 | 5 | 10 | | | | | | | | |
| SR-295 (parts) | | | | | | | 2.5 | 5 | 10 | | | | | |
| SR-399 (parts) | | | | | | | | | | 2.5 | 5 | 10 | | |
| SR-213 (parts) | | | | | | | | | | | | | 10 | 10 |
| MgO (parts) | | | | | | | | | | | | | | 3 |
| Tensile str. (psi) | 920 | 1475 | 2525 | 875 | 1310 | 2330 | 1310 | 1965 | 2835 | 1475 | 2210 | 2650 | 225 | 1650 |
| Tensile str. (MPa) | 6.3 | 10.2 | 17.4 | 6.0 | 9.0 | 16.1 | 9.0 | 13.6 | 19.6 | 10.2 | 15.2 | 18.3 | 1.6 | 11.4 |
| Elong. at break (%) | 500 | 350 | 200 | 650 | 500 | 330 | 350 | 220 | 200 | 400 | 320 | 170 | 550 | 650 |
| Set at break (%) | 18 | 6 | 12 | 12 | 12 | 12 | 6 | 6 | 12 | 12 | 12 | 6 | | 25 |
| 100% Modulus (psi) | 220 | 550 | 1965 | 215 | 220 | 735 | 325 | 1100 | 2290 | 245 | 735 | 2550 | | 125 |
| 100% Modulus (MPa) | 1.5 | 3.8 | 13.6 | 1.5 | 1.5 | 5.1 | 2.2 | 7.6 | 15.8 | 1.7 | 5.1 | 17.6 | | 0.9 |
| Hardness (Shore A) | 40 | 40 | 87 | 60 | 65 | 76 | 66 | 75 | 84 | 67 | 73 | 83 | 58 | 64 |

EP 0 357 329 A2

## Examples 25-29

A series of crosslinked films was made and tested as in Examples 1-7 except using different fluorocarbon elastomer copolymers made from vinylidene fluoride and various copolymerizable fluorine-containing monomers in mole percent indicated below:

| Example No. | 3 | 25 | 26 | 27 | 28 | 29 |
|---|---|---|---|---|---|---|
| vinylidene fluoride | 78 | 61 | 65 | 59 | 51 | 25 |
| hexafluoropropylene | 22 | 18 | 35 | 40 | 23 | |
| tetrafluoro-roethylene | | 21 | | | 26 | |
| chlorotrifluoro-roethylene | | | | 1 | | 75 |

Ten parts of SR-351 was used in each of Examples 3 and 25-29, and the exposure of each was 10 Mrads. Testing is reported in Table IV.

### TABLE IV

| Example No. | 3 | 25 | 26 | 27 | 28 | 29 |
|---|---|---|---|---|---|---|
| Tensile str. (psi) | 2525 | 2945 | 1765 | 2330 | 2525 | 3085 |
| Tensile str. (MPa) | 17.4 | 20.3 | 12.2 | 16.1 | 17.4 | 21.3 |
| Elong. at break (%) | 200 | 300 | 300 | 250 | 160 | 60 |
| Set at break (%) | 12 | 12 | 37 | 6 | 6 | 37 |
| 100% Modulus (psi) | 1965 | 980 | 980 | 1225 | 1965 | |
| 100% Modulus (MPa) | 13.6 | 6.8 | 6.8 | 8.5 | 13.6 | |
| Hardness (Shore A) | 87 | 70 | 66 | 72 | 77 | 91 |

## Examples 30-34

A series of crosslinked films was made as in Examples 8-13 except omitting the carbon black and adding to the blend 1/4 of the amount of the curing agent used to make the above described control film C-2, namely 0.525 part bisphenol AF,
0.125 part triphenylbenzyl phosphonium chloride,
0.75 part magnesium oxide,
1.5 parts calcium hydroxide. These films were partially thermally crosslinked in a press (1000 psi; 6.9 MPa) for 10 minutes at 177°C and subsequently exposed to gamma radiation as indicated in Table V for further crosslinking. Testing of the films is reported in Table V. Table V also includes Comparative Films C-5 and C-6 which are identical to the films of Examples 30-34 except omitting the polyfunctional acrylate and either not being irradiated (Comparative Film C-5) or being irradiated as indicated (Comparative Film C-6).

TABLE V

| Example No. | 30 | 31 | 32 | 33 | 34 | C-5 | C-6 |
|---|---|---|---|---|---|---|---|
| SR-351 (parts) | 10 | 10 | 10 | 10 | 5 | - | - |
| Exposure (Mrads) | 0.28 | 0.58 | 1.0 | 4.1 | 4.1 | 0 | 1.0 |
| Tensile str. (psi) | 2100 | 2175 | 2585 | 2876 | 2095 | 810 | 815 |
| Tensile str. (MPa) | 14.5 | 15.0 | 17.8 | 19.8 | 14.4 | 5.6 | 5.6 |
| Elong. at break (%) | 310 | 270 | 160 | 110 | 240 | 610 | 570 |
| Set at break (%) | 18 | 18 | 25 | 6 | 12 | 18 | 18 |
| 100% Modulus (psi) | 1145 | 1360 | 1695 | 2800 | 1195 | 140 | 135 |
| 100% Modulus (MPa) | 7.9 | 9.4 | 11.7 | 19.3 | 8.2 | 1.0 | 0.9 |
| Hardness (Shore A) | 76 | 78 | 82 | 88 | 76 | 54 | 56 |

11

EP 0 357 329 A2

## EXAMPLES 35-37

A series of crosslinked films was made as in Examples 30-34 except including carbon black and doubling the amount of the curing agent to 1/2 of the amount used to make the control film C-2. Test results are in Table VI.

### TABLE VI

| Example No. | 35 | 36 | 37 |
|---|---|---|---|
| SR-351 | 10 | 10 | 20 |
| Carbon black | 10 | 10 | 5 |
| Exposure (Mrads) | 0.1 | 0.5 | 0.5 |
| Tensile Str. (psi) | 2745 | 1875 | 2680 |
| Tensile Str. (MPa) | 18.9 | 12.9 | 18.5 |
| Elong. at break (%) | 450 | 300 | 250 |
| Set at break (%) | 25 | 3 | 6 |
| 100% Modulus (psi) | 470 | 625 | 1560 |
| 100% Modulus (MPa) | 3.2 | 4.3 | 10.8 |
| Hardness (Shore A) | 71 | 76 | 88 |

## Examples 38-42

A series of crosslinked films was made in the same manner as were the films of Examples 30-34, respectively, except that after each had been crosslinked by gamma radiation, it was post-cured for 24 hours at 200°C. Test results are reported in Table VII. Also reported in Table VII are data for compression set (ASTM D1414) on O-rings, 0.139 inch (3.53 mm) in cross section, tested at ambient temperature after 70 hours at 200°C.

In Table VII, Comparative Films C-7 and C-8 are similar to C-5 and C-6, respectively, except receiving the post-cure.

12

TABLE VII

| Example No. | 38 | 39 | 40 | 41 | 42 | C-7 | C-8 | C-3 |
|---|---|---|---|---|---|---|---|---|
| SR-351 (parts) | 10 | 10 | 10 | 10 | 5 | 0 | 0 | 0 |
| Exposure (Mrads) | 0.28 | 0.58 | 1.0 | 4.1 | 4.1 | 0 | 1.0 | 0 |
| Tensile str. (psi) | 2345 | 2445 | 2485 | 2930 | 2200 | 815 | 840 | 2000 |
| Tensile str. (MPa) | 16.2 | 16.9 | 17.1 | 20.2 | 15.2 | 5.6 | 5.8 | 13.8 |
| Elong. at break (%) | 230 | 250 | 160 | 110 | 230 | 600 | 600 | 200 |
| Set at break (%) | 6 | 12 | 18 | 6 | 6 | 12 | 12 | 3 |
| 100% Modulus (psi) | 1710 | 1865 | 1685 | 2900 | 1250 | 135 | 135 | 900 |
| 100% Modulus (MPa) | 11.8 | 12.9 | 11.6 | 20.0 | 8.6 | 0.9 | 0.9 | 6.2 |
| Hardness (Shore A) | 85 | 85 | 87 | 89 | 76 | 54 | 56 | 79 |
| Compression Set (%) | | | 33 | | | | 53 | 53 | 16 |

**Examples 43-49**

A series of crosslinked films was made by milling a solvent-free mixture of the substantially amorphous copolymer of Examples 1-7, the polyfunctional acrylate SR-351, and 1/4 of a curing amount of curing agent as in Examples 30-34. Each of the resulting films was about 1.6 to 1.8 mm in thickness and partially thermally crosslinked in a press for 10 minutes at 177°C. After being further crosslinked by gamma irradiation, three of the films were post-cured for 24 hours at 200°C as indicated in Table VII before being tested. Changes in level of the polyacrylate SR-351 and the exposure are indicated in Table VIII.

13

TABLE VIII

| Example No. | 43 | 44 | 45 | 46 | 47 | 48 | 49 |
|---|---|---|---|---|---|---|---|
| SR-351 (parts) | 10 | 20 | 20 | 5 | 10 | 10 | 10 |
| Barytes (parts) | | | 20 | | | | |
| Exposure (Mrads) | 0.54 | 0.54 | 0.54 | 4 | 1 | 4 | 4 |
| Post-cured | No | No | No | Yes | Yes | No | Yes |
| Tensile str. (psi) | 2100 | 2805 | 2045 | 2200 | 2485 | 2875 | 2930 |
| Tensile str. (MPa) | 14.5 | 19.3 | 14.1 | 15.2 | 17.1 | 19.8 | 20.2 |
| Elong. at break (%) | 300 | 250 | 250 | 230 | 160 | 110 | 110 |
| Set at break (%) | 6 | 6 | 6 | 6 | 18 | 6 | 6 |
| 100% Modulus (psi) | 855 | 425 | 270 | 1250 | 1685 | 2800 | 2900 |
| 100% Modulus (MPa) | 5.9 | 2.9 | 1.9 | 8.6 | 11.6 | 19.3 | 20.0 |
| Hardness (Shore A) | 76 | 90 | 82 | 76 | 87 | 88 | 89 |

## EXAMPLE 50

To 100 parts of fluorocarbon elastomer copolymer of Example 3 were added 10 parts of SR-351, 30 parts of carbon black (N990) and 1.5 parts of carnauba wax on a rubber mill. The resulting composition was extruded to form tubing having an inside diameter of about 1.3 cm and a wall thickness of 0.5 mm. After being exposed to E-beam of 225 KeV, 5 Mrads from each of four directions for a total exposure of 20 Mrads, the tubing was tested for use as a fuel line by attaching a 30.5-cm length beneath a tank of about 4 liters of ASTM "Reference Fuel C" which is equal parts by volume of isooctane and toluene. Permeation through the tubing after seven days, was 2 grams. A General Motors specification allows a permeation of 10 grams, and a commercial fluoroelastomer fuel line of the same size had a permeation of 4 grams.

## Example 51

The copolymer of Example 3 (vinylidene fluoride/hexafluoropropylene 78/22) was dissolved in diethylene glycol monobutyl ether acetate to form a 20% solution by weight. To this solution was added 10 parts by weight of SR-351 based on 100 parts copolymer solids. Part of this modified solution and ZnS phosphorescent powder were mixed at a 8:1 phosphorescent powder:copolymer ratio to prepare a paste. The phosphorescent paste was silk-screen printed as a thin layer onto a flexible, transparent electrode, dried 15 min. at 104°C, and E-beam irradiated at 225 KeV with 3 Mrad under nitrogen purge to crosslink the luminescent layer. Silk-screen printed onto this layer was an insulating paste made from the modified solution at 4:1 $BaTiO_2$:copolymer, and this was dried 30 min. at 104°C. Onto this layer a paste of Ag flake in epoxy resin was silk-screen printed and cured 2 hrs at 104°C to form an electrically conductive electrode. The electroluminescent display panel formed in this manner exhibited a luminance brightness of 31.7 ft-L (109 cd/m$^2$) at an A.C. voltage of 120 V at 400 Hz.

## Examples 52-55

A series of crosslinked films was made as in Example 1-7 except that the copolymer was replaced by "Aflas" 200 which is a copolymer of vinylidene fluoride, propylene, and tetrafluoroethylene at a mole ratio of 33:15:52. The amounts of SR-351 polyfunctional acrylate, the exposures, and test results are in Table IX.

TABLE IX

| Example No. | 52 | 53 | 54 | 55 | C-9 | C-10 |
|---|---|---|---|---|---|---|
| SR-351 (parts) | 2.5 | 5 | 10 | 15 | 0 | 0 |
| Exposure (Mrads) | 10 | 10 | 10 | 10 | 10 | 0 |
| Tensile str. (psi) | 2000 | 2855 | 2750 | 2430 | 2200 | 200 |
| Tensile str. (MPa) | 13.8 | 19.7 | 19.0 | 16.8 | 12.7 | 1.4 |
| Elong at break (%) | 450 | 340 | 250 | 210 | 500 | 600 |
| Set at break (%) | 6 | 6 | 6 | 6 | 6 | 25 |
| 100% Modulus (psi) | 200 | 300 | 1000 | 860 | 200 | 200 |
| 100% Modulus (MPa) | 1.4 | 2.1 | 6.9 | 5.9 | 1.0 | 1.4 |

**Examples 56-60**

A series of crosslinked films was made as in Examples 52-55 except using various polyfunctional acrylates, all at 10 parts. The exposure was maintained at 10 Mrads. Test results are in Table X.

TABLE X

| Example | 56 | 57 | 58 | 59 | 60 |
|---|---|---|---|---|---|
| SR-351 (parts) | | | | | |
| SR-350 (parts) | 10 | | | | |
| SR-368 (parts) | | 10 | | | |
| SR-290 (parts) | | | 10 | | |
| SR-213 (parts) | | | | 10 | |
| SR-444 (parts) | | | | | 10 |
| Tensile str. (psi) | 2625 | 2000 | 2250 | 1875 | 3000 |
| Tensile str. (MPa) | 18.1 | 13.8 | 15.3 | 12.9 | 20.7 |
| Elong. at break (%) | 280 | 400 | 270 | 450 | 180 |
| Set at break (%) | 6 | 12 | 12 | 12 | 12 |
| 100% Modulus (psi) | 500 | 250 | 750 | 200 | 2000 |
| 100% Modulus (MPa) | 4.3 | 1.7 | 5.2 | 1.4 | 13.8 |
| Hardness (Shore A) | 70 | 64 | 73 | 55 | 75 |

**Claims**

1. Method of crosslinking a substantially amorphous copolymer of vinylidene fluoride and at least one copolymerizable fluorine-containing monomer, said method comprising the steps of
   1) blending with 100 parts of said copolymer at least 2 parts by weight of a polyfunctional acrylate plus, when the amount of acrylate is less than 8 parts, sufficient thermal curing agent to permit the blend to be molded to form a shaped body, and when the acrylate is difunctional, including a base;
   2) forming the blend into a shaped body; and

15

EP 0 357 329 A2

3) exposing the body to from 0.1 to 20 Mrads of high-energy ionizing radiation.

2. Method as defined in claim 1 wherein said shaped body is formed at a temperature between 60° and 100°C during step 2).

3. Method as defined in claim 2 wherein the temperature of said body approximates ordinary room temperature during step 3).

4. Method as defined in claim 3 plus step 4), post-curing the body at a temperature of from 175° to 260°C.

5. Method as defined in claim 1 wherein said blending step 1) is carried out in solution, and forming step 2) is carried out at room temperature.

6. Method as defined in claim 1 wherein a thermal curing agent is employed in step 1) and step 2) is carried out at a temperature of 150-200°C.

7. Method as defined in claim 6 plus step 4), post-curing said body at a temperature of 175-260°C.

8. Method as defined in claim 1 wherein said copolymerizable fluorine-containing monomer is selected from hexafluoropropylene, tetrafluoroethylene, and chlorotrifluoroethylene.

9. Method as defined in claim 1 wherein said high-energy radiation is an electron beam.

10. Method as defined in claim 1 wherein said high-energy radiation is gamma radiation.

11. Method as defined in claim 1 wherein a thermal curing agent is included in step 1).

12. Method as defined in claim 11 wherein said thermal curing agent comprises a blend of a polyphenol, an onium compound, and an acid acceptor.

13. Method as defined in claim 1 wherein said polyfunctional acrylate is at least trifunctional.

14. Method as defined in claim 1 wherein said polyfunctional acrylate is selected from trimethylolpropane triacrylate, trimethylolpropane trimethacrylate, 1,4-butanediol diacrylate, tris(2-hydroxyethyl) isocyanurate trimethacrylate, pentaerythritol tetraacrylate, tris(2-hydroxyethyl) isocyanurate triacrylate, dipentaerythritol hydroxypentaacrylate, and pentaerythritol triacrylate.

15. Method as defined in claim 1 wherein said copolymer is a copolymer of from 10 to 90 parts of vinylidene fluoride and correspondingly from 90 to 10 parts by weight of copolymerizable fluorine-containing monomer.

16. Method as defined in claim 1 wherein said copolymer is a copolymer of from 25 to 80 parts of vinylidene fluoride and correspondingly from 75 to 20 parts by weight of said at least one copolymerizable fluorine-containing monomer.

17. Method as defined in claim 1 wherein said shaped body formed in step 2) is tubing.

18. Method as defined in claim 1 wherein said shaped body formed in step 2) is an electroluminescent sheet.

19. Crosslinked, substantially amorphous copolymer of vinylidene fluoride and at least one copolymerizable fluorine-containing monomer, wherein the improvement comprises:said copolymer has a tensile strength of at least 20 MPa, an elongation of at least 125%, 100% modulus in tension of at least 16 MPa, and at most 12% set at break.

20. A copolymer as defined in claim 19 and having at 149°C a tensile strength of at least 10 MPa and an elongation at break of at least 75%.

21. Crosslinked, substantially amorphous copolymer of vinylidene fluoride and at least one copolymerizable fluorine-containing monomer produced by the method of claim 1.

16